# EUROPEAN PATENT APPLICATION

(11) **EP 4 651 258 A1**
(43) Date of publication of application: **19.11.2025**
(21) Application number: 24882821.2
(22) Date of filing: 23.10.2024
(51) Int. Cl.: H01M 10/0585, H01M 4/134, H01M 4/40, H01M 4/38, H01M 4/62, H01M 10/42, H01M 10/052, H01M 10/0562, H01M 4/02

(54) **ALL-SOLID-STATE BATTERY, NEGATIVE ELECTRODE ASSEMBLY, AND METHOD FOR MANUFACTURING SAME**

(30) Priority: 23.10.2023 KR 20230141816
(71) Applicant: LG Energy Solution, Ltd., Seoul 07335 (KR)
(72) Inventor: CHOI, Ran, Daejeon 34122 (KR); YOM, Jee Ho, Daejeon 34122 (KR)
(74) Representative: Goddar, Heinz J.
(86) International application number: PCT/KR2024/016199
(87) International publication number: WO 2025/089794

(57) **Abstract**

The present invention relates to an all-solid-state battery comprising a positive electrode, a solid electrolyte layer, a coating layer, and a negative electrode current collector, wherein the coating layer comprises amorphous carbon, the amorphous carbon comprises nitrogen-containing amorphous carbon, and the nitrogen content (atomic %) contained in the coating layer is in the range of 0.5% to 7%. The all-solid-state battery according to the present invention may have an excellent capacity retention rate according to cycles during high-rate charging and discharging.

## Description

### TECHNICAL FIELD

The present disclosure relates to an all-solid-state battery using lithium or a lithium alloy as an anode active material, anode assembly and the method of manufacturing the same.

The present application claims the benefit of and priority to Korean Patent Application No. 10-2023-0141816, filed on October 23, 2023, with the Korean Intellectual Property Office, the disclosure of which is incorporated herein by reference in its entirety for all purposes as if fully set forth herein.

### BACKGROUND

In recent years, all-solid-state batteries having high energy density and stability have been proposed due to industrial requirements, and efforts to further enhance these characteristics have continued. For example, using lithium as an anode active material to increase the energy density of an all-solid-state battery is is currently under study.

As a method for using lithium as an anode active material, approaches have been proposed that involve either using lithium or a lithium alloy as the anode active material layer in the battery manufacturing process, or forming a lithium layer during the charging process without having a separate anode active material layer on an anode current collector.

However, when lithium is used as the anode active material, lithium (metal lithium) precipitates on the anode side during charging. As the charging and discharging processes are repeated, lithium dendrites grow through gaps in the solid electrolyte layer. The growth of dendrites can lead to short circuits or reduced battery capacity, posing significant problems.

Therefore, there is a need to improve the above problems in order to commercialize the method of using lithium as an anode active material.

The background description provided herein Is for the purpose of generally presenting context of the disclosure. Unless otherwise indicated herein, the materials described in this section are not prior art to the claims in this application and are not admitted to be prior art, or suggestions of the prior art, by inclusion in this section.

### SUMMARY

### Technical Goals

The present disclosure is to solve the above problem and an object of the present disclosure is to provide an all-solid-state battery with improved high rate charge/discharge characteristics.

### Technical Solutions

The present disclosure relates to an all-solid-state battery using lithium or a lithium alloy as an anode active material, comprising: a cathode; a solid electrolyte layer; a coating layer; and an anode current collector, wherein the coating layer comprises an amorphous carbon, wherein the amorphous carbon comprises a nitrogen-containing amorphous carbon, and wherein a nitrogen amount (atomic %) included in the coating layer ranges from 0.5% to 7%.

In an embodiment, the nitrogen-containing amorphous carbon may be a nitrogen-doped amorphous carbon.

In an embodiment, the nitrogen-containing amorphous carbon may be an amorphous carbon with nitrogen doped on a surface thereof.

In an embodiment, 90% or more of nitrogen in the nitrogen-containing amorphous carbon may be located within a depth of 5 nm from the surface of the nitrogen-containing amorphous carbon.

In an embodiment, the atomic ratio of carbon to nitrogen in the coating layer may be in the range of 14:1 to 200:1.

In an embodiment, the amorphous carbon may have an average particle diameter of primary particles of less than 100 nm.

In an embodiment, the amorphous carbon may be one or more selected from the group consisting of carbon black, acetylene black, furnace black, Ketjen black and graphene.

In an embodiment, the amorphous carbon may further comprise untreated amorphous carbon that does not include nitrogen.

In an embodiment, the coating layer may further comprise a lithium-affinitive element capable of forming an alloy or compound with lithium.

In an embodiment, the lithium-affinitive element may be comprised in a range of 10 to 50 parts by weight based on 100 parts by weight of amorphous carbon.

In an embodiment, the lithium-affinitive element may be at least one selected from the group consisting of gold (Au), platinum (Pt), palladium (Pd), silicon (Si), silver (Ag), aluminum (Al), bismuth (Bi), tin (Sn), and zinc (Zn).

In an embodiment, a ratio of an average particle diameter of the lithium-affinitive element to an average particle diameter of primary particles of the amorphous carbon may be in a range of 0.5 to 5.

In an embodiment, the coating layer may further comprise a binder.

In an embodiment, the binder may be comprised in a range of 1 to 20 parts by weight based on 100 parts by weight of the amorphous carbon.

In an embodiment, D₉₉/D₁₀ of the coating layer may be 140 or less.

In an embodiment, D₉₉/D₅₀ of the coating layer may be 12 or less.

In an embodiment, D₉₉ of the coating layer may be 3.5 µm or less.

In an embodiment, the solid electrolyte layer may comprise a sulfide-based solid electrolyte.

In an embodiment, the sulfide-based solid electrolyte may be at least one selected from the group consisting of Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-Li₃PO₄, Li₂S-SiS₂-LiₚMO_{q}, wherein p and q are positive numbers, and M is one of P, Si, Ge, B, Al, Ga, and In, Li₂S-SiS₂-P₂S₅-LiI, Li₂S-P₂S₅, Li₂S-P₂S₅-LiX, wherein X is a halogen element, Li₂S-B₂S₃, Li₂S-P₂S₅-ZₘSₙ, wherein m and n are positive numbers, and Z is one of Ge, Zn or Ga, Li₂S-GeS₂, Li₇₋ₓPS₆₋ₓClₓ (0≤x≤2), Li₇₋ₓPS₆₋ₓBrₓ(0≤5x≤2) and Li₇₋ₓPS₆₋ₓIₓ(0≤x≤2).

In an embodiment, a ratio of the 39^{th} cycle discharge capacity to the first cycle discharge capacity of the all-solid-state battery may be 90% or more.

The present disclosure also relates to an anode assembly for an anodeless battery, including: an anode current collector; and a coating layer, wherein the coating layer comprises an amorphous carbon, wherein the amorphous carbon comprises a nitrogen-containing amorphous carbon, and wherein a nitrogen amount (atomic %) included in the coating layer ranges from 0.5% to 7%.

The present disclosure also relates to a method of manufacturing an anode assembly, comprising the steps of: mixing a nitrogen-containing precursor with an amorphous carbon; heat-treating the mixed nitrogen-containing precursor with the amorphous carbon in a furnace to obtain a nitrogen-containing amorphous carbon; and forming a coating layer comprising the nitrogen-containing amorphous carbon on a surface of an anode current collector.

In an embodiment, the nitrogen-containing precursor may comprise at least one selected from the group consisting of melamine, dopamine, urea and chitosan.

### Effect of Invention

The present disclosure may provide an all-solid-state battery with excellent capacity retention over multiple cycles during high-rate charging and discharging.

### BRIEF DESCRIPTION OF DRAWINGS

The accompanying drawings illustrate exemplary embodiments of the present disclosure and together with the following detailed description, serve to provide a further understanding of the technical aspect of the present disclosure, and thus the present disclosure should not be construed as being limited to the drawings.
FIG. 1 is a graph showing the results of particle size analysis of the coating layer slurry of Example 1.
FIG. 2 is a graph showing the results of particle size analysis of the coating layer slurry of Example 2.
FIG. 3 is a graph showing the results of particle size analysis of the coating layer slurry of Comparative Example 1.
FIG. 4 is a graph showing the assessment results of the high-rate charge characteristics of the all-solid-state batteries of Examples 1 and 2 and Comparative Example 1.

### DETAILED DESCRIPTION

Terms and words used in the present specification and the claims should not be construed to be limited to ordinary or dictionary meanings, but should be construed to be meanings and concepts corresponding to the technical idea of the present disclosure based on the principle that an inventor may appropriately define the concept of terms in order to explain his or her invention in the best way.

Therefore, it should be understood that the configuration of the example described in the present specification is only one most preferable example of the present disclosure and does not represent all the technical ideas of the present disclosure, and therefore, various equivalents and modified examples may exist to replace them at the time of application of the present disclosure.

In the present specification, the singular expression includes the plural expression unless the context clearly indicates otherwise.

In the present specification, when a part "comprises" a component, this means that other components may be further included rather than excluding other components unless otherwise stated. Thus, for example, a composition comprising Compound A may include compounds other than Compound A. However, the term "comprising" also encompasses, in particular embodiments, more limited expressions "~ essentially/necessarily consisting of" and "~ consisting of," for example, "a composition comprising Compound A" may also (essentially/ necessarily) consist of Compound A.

In connection therewith, it should be understood that the term "include" or "have" as used herein is intended to designate the existence of any implemented feature, number, step, component or a combination thereof, and does not exclude in advance the possibility of the existence or addition of one or more other features, numbers, steps, components or a combination thereof.

In the present specification, when any layer is located on another layer or between any other layers, this includes not only the case where any layer is in contact with another layer, but also the case where another layer or material exists between the two layers.

When an amount, concentration, or other value or parameter is given herein as an enumeration of ranges, preferable ranges or preferable upper and lower values, it is to be understood that the specification specifically describes all ranges formed from any pair of an upper range limit or a preferable value and a lower range limit or a preferable value, regardless of whether it describes a separate range. If the range of numerical values is referred to herein, unless otherwise indicated, for example, if there is no limiting terms such as more, less, etc., the range is intended to include the endpoint values thereof and all integers and fractions within the range. The scope of the present disclosure is not intended to be limited to a specific value referred to when defining a range.

Among the properties mentioned herein, when the measurement temperature has an effect on a property, the property is measured at room temperature unless otherwise specified. The term "room temperature" may refer to a natural temperature that is not heated or cooled, for example, any temperature in the range of about 10°C to 30°C, or a temperature of about 23°C or about 25°C. In addition, unless otherwise specified, the unit of temperature in this specification is °C.

Further, among the properties mentioned herein, when the measurement pressure has an effect on a property, the property is measured at normal pressure, i.e. atmospheric pressure (about 1 atmosphere), unless otherwise specified.

In the present specification, the term "all-solid-state battery" may mean an all-solid secondary battery, and may be referred to as a cell, a secondary battery, a battery, or the like.

In the present specification, the term "coating layer" refers to a layer formed between an anode current collector and a solid electrolyte layer in an all-solid-state battery, in which lithium is absorbed into the coating layer during charging, and lithium is precipitated between the anode current collector and the coating layer after the charging capacity of the coating layer is exceeded to form a metal layer, and the lithium of the coating layer and/or the metal layer is ionized during discharging to move toward the cathode, and the configuration and operating mechanism may be different from those of a conventional anode active material layer. The coating layer may serve as a protective layer for the lithium metal layer by coating the lithium metal layer formed on the anode current collector during the charging process and suppress growth of lithium dendrite, through which short-circuit and capacity reduction of the all-solid-state battery may be suppressed, and performance and the like may be improved. That is, the coating layer may include an anode-free coating layer.

The present disclosure may relate to an all-solid-state battery, comprising a cathode, a solid electrolyte layer, a coating layer and/or an anode current collector, wherein the coating layer may comprise an amorphous carbon, wherein the amorphous carbon may comprise a nitrogen-doped amorphous carbon, and wherein a nitrogen amount (atomic %) included in the coating layer may range from 0.5% to 7%

In another example, the nitrogen amount (atomic %) included in the coating layer relative to the total atoms in the coating latyer can be 0.5% or more, 0.7% or more, 0.9% or more, 1% or more, 1.1% or more, 1.2% or more, 1.3% or more, 1.4% or more, 1.5% or more, 1.6% or more, 1.7% or more, 1.8% or more, 1.9% or more, 2% or more, 2.1% or more, 2.2% or more, 2.3% or more, 2.4% or more, 2.5% or more, 2.6% or more, 2.7% or more, 2.8% or more, 2.9% or more, 3% or more, 3.1% or more, 3.3% or more, or 3.5% or more, and/or 7% or less, 6.5% or less, 6% or less, 5.5% or less, 5% or less, 4.5% or less, 4% or less, 3.5% or less, 3% or less, 2.5% or less, or 2% or less. Specifically, the nitrogen amount (in atomic %) included in the coating layer may range from 1% to 5.5% relative to the total atoms in the coating layer. Preferably, the nitrogen amount (in atomic %) in the coating layer may range from 1.1% to 5%, 1.2% to 4%, 1.3% to 3%, or 1.4% to 2.9% relative to the total atoms in the coating layer.

When the nitrogen amount (in atomic %) included in the coating layer meets the aforementioned range, it is possible to provide an all-solid-state battery with improved coulombic efficiency and/or performance by reducing lithium diffusion resistance and minimizing the irreversible reaction between nitrogen and lithium ions.

In the present specification, the term "a nitrogen amount included in the coating layer " may mean, for example, an average value of the ratio of nitrogen amount (in atomic %) present in any region of the coating layer. Specifically, in one example, the nitrogen included in the coating layer may comprise nitrogen contained within the amorphous carbon, as well as nitrogen not contained within the amorphous carbon. The nitrogen not contained within the amorphous carbon may include nitrogen present in other components within the coating layer, such as binders, but is not limited to these.

The nitrogen amount included in the coating layer can be quantitatively analyzed, for example, by using X-ray photoelectron spectroscopy (XPS), but is not limited to this method.

The nitrogen-containing amorphous carbon may include nitrogen-doped amorphous carbon.

In the present disclosure, 'nitrogen-doped amorphous carbon' may refer to a material where nitrogen is added or substituted into the basic structure of amorphous carbon at a specific content. The location of the nitrogen introduced as a dopant in the amorphous carbon is not limited. For example, nitrogen may be present on the surface of the amorphous carbon, within the internal structure, or on both the surface and the internal structure. Additionally, the nitrogen-doped amorphous carbon may contain nitrogen uniformly across the surface and/or internal structure, or it may contain nitrogen irregularly (non-uniformly) distributed on the surface and/or within the internal structure.

In one example, the nitrogen-doped amorphous carbon may be characterized in that nitrogen is doped on the surface of amorphous carbon.

In the present specification, the expression "nitrogen is doped on the surface of amorphous carbon" may mean, for example, that nitrogen is doped on a lattice of the surface of carbon, and in another example, that nitrogen is doped in a space between the outer side of the boundary of a virtual figure reduced by the same percentage (e.g., 90%, 95%, 99%, etc.) from all sides of any boundary surface of the amorphous carbon and the actual boundary of the amorphous carbon. In addition, the phrase "doped on the surface" may mean that 90% or more, 95% or more, 99% or more, or 100% of nitrogen included in the entire particles is present on the surface.

In another example, 90% or more of the nitrogen contained in the nitrogen-containing amorphous carbon may be located within a depth of 5 nm from the surface of the nitrogen-containing amorphous carbon. Specifically, the nitrogen amount within the 5 nm depth from the surface can be measured using XPS equipment, but this is not limited to this method. When 90% or more of the nitrogen in the nitrogen-containing amorphous carbon is within a 5 nm depth from the surface, an all-solid-state battery utilizing this nitrogen-containing amorphous carbon in the coating layer can achieve an excellent capacity retention rate during high-rate charge-discharge cycles.

The coating layer may have an atomic ratio of carbon to nitrogen in the range of 14:1 to 200:1. Specifically, the atomic ratio of carbon to nitrogen in the coating layer may be selected with a lower limit of 14:1, 16:1, 18:1, 20:1, 22:1, 24:1, 25:1, 26:1, 28:1, 30:1, 35:1, 40:1, 45:1, 50:1, or 55:1, and an upper limit of 200:1, 150:1, 120:1, 110:1, 100:1, 90:1, 85:1, 80:1, 75:1, 70:1, 65:1, or 60:1. For example, the carbon-to-nitrogen atomic ratio in the coating layer may range from 14:1 to 200:1, 20:1 to 100:1, 20:1 to 80:1, or 25:1 to 60:1.

When the carbon-to-nitrogen atomic ratio in the coating layer meets the aforementioned range, it is possible to provide an all-solid-state battery with improved coulombic efficiency and/or performance by reducing lithium diffusion resistance and minimizing the irreversible reaction between nitrogen and lithium ions.

The coating layer may be also characterized by a ratio of nitrogen amount (atomic %) relative to the carbon amount (in atomic %), that may be at least 0.5% or more, 0.7% or more, 0.9% or more, 1.1% or more, 1.3% or more, 1.5% or more, 1.7% or more, 1.9% or more, 2.1% or more, 2.3% or more, 2.5% or more, 2.7% or more, 2.9% or more, 3.1% or more, 3.3% or more, or 3.5% or more, and/or 7% or less, 6.5% or less, 6% or less, 5.5% or less, 5% or less, 4.5% or less, 4% or less, 3.5% or less, 3% or less, 2.5% or less, or 2% or less.

The nitrogen amount (atomic %) relative to the carbon amount (atomic %) in the coating layer may be within a range of 1.0% to 5.5%. Specifically, the nitrogen amount relative to the carbon amount of the coating layer may be at least 1.1% or more, 1.3% or more, 1.5% or more, 1.7% or more, 1.9% or more, 2.1% or more, 2.3% or more, or 2.5% or more, and/or 5% or less, 4.5% or less, 4% or less, or 3.5% or less.

When the nitrogen amount (atomic %) relative to the carbon amount (atomic %) in the coating layer meets the aforementioned range, it is possible to provide an all-solid-state battery with improved coulombic efficiency and/or performance by reducing lithium diffusion resistance and minimizing the irreversible reaction between nitrogen and lithium ions.

In the present disclosure, the term 'atomic ratio of carbon to nitrogen' may refer to the average value of the ratio of the number of carbon atoms to the number of nitrogen atoms, measured in any region of the coating layer. The number of carbon atoms may refer to the number of carbon atoms included in the carbon-containing components within the coating layer, and the number of nitrogen atoms may refer to the number of nitrogen atoms included in the nitrogen-containing components within the coating layer. Here, the atomic ratio of carbon to nitrogen may represent the molar ratio of carbon and nitrogen atoms. That is, the number of carbon atoms may refer to the number of moles of carbon atoms, and the number of nitrogen atoms may refer to the number of moles of nitrogen atoms.

In one example, the carbon-containing component included in the coating layer may include the aforementioned amorphous carbon, or, if the binder contains carbon, the carbon-containing component may include the binder; however, it is not limited to these. Additionally, any component within the coating layer that contains carbon may be included as the carbon-containing component.

The nitrogen-containing component included in the coating layer may, for example, include the nitrogen-containing amorphous carbon, but it is not limited to this. Alternatively, in one example, if the binder within the coating layer contains nitrogen, the binder may be included as a nitrogen-containing component; however, it is not limited to this. Additionally, any component within the coating layer that contains nitrogen may be included as a nitrogen-containing component.

The nitrogen-containing component and the carbon-containing component may be the same or may be different from each other.

The amorphous carbon may be characterized by a nitrogen amount (in atomic %) relative to the carbon amount (in atomic %) in the range of 0.5% to 7%.

In another example, the amorphous carbon may be characterized by a nitrogen amount (in atomic %) relative to the carbon amount (in atomic %) that may be at least 0.5% or more, 0.7% or more, 0.9% or more, 1.1% or more, 1.3% or more, 1.5% or more, 1.7% or more, 1.9% or more, 2.1% or more, 2.3% or more, 2.5% or more, 2.7% or more, 2.9% or more, 3.1% or more, 3.3% or more, or 3.5% or more, and/or 6.5% or less, 6% or less, 5.5% or less, 5% or less, 4.5% or less, 4% or less, 3.5% or less, 3% or less, 2.5% or less, or 2% or less. Specifically, the nitrogen-containing amorphous carbon may have a nitrogen amount (in atomic %) relative to the carbon amount (in atomic %) in the range of 1% to 5.5%. More specifically, the nitrogen content relative to the carbon content may be at least 1.1% or more, 1.3% or more, 1.5% or more, 1.7% or more, 1.9% or more, 2.1% or more, 2.3% or more, or 2.5% or more, and/or 5% or less, 4.5% or less, 4% or less, or 3.5% or less.

In the present disclosure, the term 'a ratio of nitrogen amount to carbon amount in amorphous carbon' may refer, for example, to the average value of the ratio of nitrogen amount to carbon amount measured for all amorphous carbon contained in any region of the coating layer. Specifically, in one example, if the amorphous carbon consists only of nitrogen-containing amorphous carbon, it may refer to the average value of the nitrogen-to-carbon amount ratio measured for all nitrogen-containing amorphous carbon in any region of the coating layer. In another example, if the amorphous carbon includes both nitrogen-containing amorphous carbon and untreated amorphous carbon, as discussed later, it may refer to the average value of the nitrogen-to-carbon amount ratio measured for the mixture of nitrogen-containing and untreated amorphous carbon in any region of the coating layer. The nitrogen-to-carbon amount ratio may be measured, for example, on samples prepared as described above using the method of Evaluation Example 1 or a similar method, but it is not limited to this. By controlling the amorphous carbon in the coating layer to exhibit such a nitrogen-to-carbon amount ratio, the present disclosure can provide an all-solid-state battery with reduced lithium diffusion resistance and minimized irreversible reactions between nitrogen and lithium ions, thereby improving coulombic efficiency and performance.

The nitrogen-containing amorphous carbon may be, for example, an amorphous carbon doped with nitrogen by at least one selected from pyridinic, graphitic, pyrrolic, and quaternary bonds. In another example, the nitrogen-containing amorphous carbon may be an amorphous carbon doped with nitrogen by pyridinic and graphitic bonds. The composition ratio of the pyridinic and graphitic binding nitrogen may be in the range of 2:8 to 6:4, in the range of 2.5:8.5 to 5.5:4.5, or in the range of 3:7 to 4:6. This may be a value measured by a method according to the assessment example to be described later. By controlling the characteristics of nitrogen-containing amorphous carbon as described above, lithium diffusion resistance may be further reduced. The average particle diameter of the amorphous carbon primary particles may be, for example, less than 100 nm. The average particle diameter of the primary particles may mean a volume-based average particle diameter (D₅₀). The average particle diameter of the primary particles may be, for example, measured by TEM, but is not limited thereto, and may be measured by a known method generally used in the art. In another example, the primary particle average particle diameter of the amorphous carbon may be 95 nm or less, 90 nm or less, 85 nm or less, 80 nm or less, 75 nm or less, 70 nm or less, 65 nm or less, 60 nm or less, 55 nm or less, 50 nm or less, or 45 nm or more, or 5 nm or more, 10 nm or more, 15 nm or more, 20 nm or more, 25 nm or more, 30 nm or more, 35 nm or more, or 40 nm or more. The present disclosure may control the average particle diameter of primary particles of the amorphous carbon within the above range to improve the life of an all-solid-state battery by reducing the occurrence of cracks when charging the battery, and may further improve performance by providing a movement path through which lithium ions may move efficiently.

The amorphous carbon may be, for example, at least one selected from the group consisting of carbon black, acetylene black, furnace black, Ketjen black, and graphene.

The all-solid-state battery of the present disclosure may improve dispersibility of the slurry of the coating layer and exhibit excellent cycle characteristics by including the amorphous carbon having the above characteristics in the coating layer. Although a clear mechanism has not been revealed, amorphous carbon has excellent properties of transferring lithium ions through the surface thereof, and thus, when charging, induces lithium ions supplied from the cathode to be transferred to the anode current collector to which negative charges are supplied, thereby forming a lithium metal layer between the coating layer and the anode current collector. On the other hand, the crystalline carbon such as reduced graphene oxide has excellent properties of storing lithium ions in the crystal structure, and thus when the lithium ions are filled in the crystal structure and then saturated, the lithium ions supplied from the cathode direction are precipitated mainly from the surface, of both surfaces of the crystalline carbon layer, facing the solid electrolyte layer, thereby causing short-circuiting due to dendrite. The present disclosure is expected to provide an all-solid-state battery having improved performance and/or lifespan by allowing the amorphous carbon to include nitrogen-containing amorphous carbon and controlling the amount of nitrogen in the coating layer within the above-mentioned range, thereby improving conductivity and allowing lithium ions to be uniformly formed between the coating layer and the anode current collector when charging.

The amorphous carbon may be included, for example, in an amount of 40 parts by weight or more based on 100 parts by weight of the coating layer (dry weight). In another example, the amorphous carbon may be included in an amount of 45 parts by weight or more, 50 parts by weight or more, 55 parts by weight or more, 60 parts by weight or more, or 65 parts by weight or more, or 95 parts by weight or less, 90 parts by weight or less, 85 parts by weight or less, 80 parts by weight or less, or 75 parts by weight or less, based on 100 parts by weight of the coating layer (dry weight).

The nitrogen-containing amorphous carbon may be included, for example, in an amount of 10 parts by weight or more, 20 parts by weight or more, 30 parts by weight or more, 40 parts by weight or more, 50 parts by weight or more, 60 parts by weight or more, 70 parts by weight or more, 80 parts by weight or more, 85 parts by weight or more, 90 parts by weight or more, 95 parts by weight or more, and/or 100 parts by weight, or 90 parts by weight or less, 80 parts by weight or less, 70 parts by weight or less, 60 parts by weight or less, 50 parts by weight or less, 40 parts by weight or less, 30 parts by weight or less, 20 parts by weight or less, or 10 parts by weight or less, based on 100 parts by weight of the amorphous carbon.

The all-solid-state battery of the present disclosure comprises amorphous carbon and/or nitrogen-containing amorphous carbon in a coating layer at the above weight ratio, thereby improving dispersibility of the slurry of the coating layer and exhibiting excellent cycle characteristics.

The amorphous carbon may further include, for example, untreated amorphous carbon. In the present specification, the term "untreated amorphous carbon" may mean amorphous carbon other than nitrogen-containing amorphous carbon, or amorphous carbon that does not include nitrogen.

The coating layer may be characterized in that the weight ratio of the untreated amorphous carbon to the nitrogen-containing amorphous carbon is in the range of, for example, 0.01 to 100. The weight ratio of the amorphous carbon that does not include nitrogen to the nitrogen-containing amorphous carbon may be 0.05 or more, 0.1 or more, 0.15 or more, 0.2 or more, 0.25 or more, 0.3 or more, 0.35 or more, 0.4 or more, 0.45 or more, 0.5 or more, 0.55 or more, 0.6 or more, 0.65 or more, 0.7 or more, 0.75 or more, 0.8 or more, 0.85 or more, 0.9 or more, or 0.95 or more, and/or 90 or less, 80 or less, 70 or less, 60 or less, 50 or less, 40 or less, 30 or less, 20 or less, 10 or less, 9 or less, 8 or less, 7 or less, 6 or less, 5 or less, 4 or less, 3 or less, or 2 or less.

The coating layer may further include, for example, a lithium-affinitive element forming an alloy or compound with lithium.

The coating layer may include, for example, the lithium-affinitive element in the range of 10 to 50 parts by weight based on 100 parts by weight of amorphous carbon. In another example, the all-solid-state battery of the present disclosure may include the lithium-affinitive element in an amount of 15 parts by weight or more, 20 parts by weight or more, 25 parts by weight or more, or 30 parts by weight or more, and/or 45 parts by weight or less, 40 parts by weight or less, or 35 parts by weight or less, based on 100 parts by weight of amorphous carbon. The all-solid-state battery of the present disclosure may provide excellent cycle characteristics by introducing the lithium-affinitive element along with the amorphous carbon having the above characteristics. When the lithium-affinitive element is included in a separate layer other than the coating layer including the amorphous carbon having the above characteristics, the specific surface area is so large that the solid content of the coating layer slurry is lowered, and accordingly, cracks may occur in the coating layer after drying, and the thickness of the layer serving as a protective layer for the lithium metal layer formed during charging is increased, thereby deteriorating battery performance.

The lithium-affinitive element may be, for example, at least one selected from the group consisting of gold (Au), platinum (Pt), palladium (Pd), silicon (Si), silver (Ag), aluminum (Al), bismuth (Bi), tin (Sn), and zinc (Zn).

The ratio of the average particle diameter of the lithium-affinitive element to the average particle diameter of the primary particles of the amorphous carbon may be, for example, in the range of 0.5 to 5. In another example, the ratio of the average particle diameter of the lithium-affinitive element to the average particle diameter of the primary particles of the amorphous carbon may be 0.6 or more, 0.7 or more, 0.8 or more, 0.9 or more, 1.0 or more, 1.1 or more, 1.2 or more, 1.3 or more, and/or 1.4 or less, or 4.5 or less, 4.0 or less, 3.5 or less, 3.0 or less, 2.5 or less, 2.0 or less, or 1.5 or less. By controlling the ratio of the average particle diameters of the lithium-affinitive element and the primary particles of the amorphous carbon as described above, the lithium ions may be uniformly formed or released between the coating layer and an anode current collector during the charging/discharging process, thereby improving the life and stability of the battery.

The particle diameter of the lithium-affinitive element may be, for example, in the range of 10 to 1000 nm. The particle diameter may mean a maximum particle diameter, a minimum particle diameter, or an average particle diameter. In another example, the particle diameter of the lithium-affinitive element may be 20 nm or more, 30 nm or more, 40 nm or more, or 50 nm or more, and/or 500 nm or less, 400 nm or less, 300 nm or less, 200 nm or less, or 100 nm or less.

The coating layer of the present disclosure may further include, for example, a binder. As the binder, for example, an aqueous binder, an organic binder, or a combination thereof may be used. The binder may be, for example, polyvinyl alcohol, carboxymethylcellulose, hydroxypropylcellulose, diacetylcellulose, polyvinylidene fluoride, polyvinylchloride, carboxylated polyvinylchloride, polyvinylfluoride, an ethylene oxide-containing polymer, polyvinylpyrrolidone, polyurethane, polytetrafluoroethylene, polyvinylidene, fluoride, polyethylene, polypropylene, styrene-butadiene rubber, acrylate styrene-butadiene rubber, epoxy resin, nylon, or a combination thereof. As the aqueous binder, for example, styrene butadiene rubber, carboxymethylcellulose, or a combination thereof may be used. As the organic-based binder, for example, polytetrafluoroethylene, polyvinylidene fluoride, or a combination thereof may be used.

For example, the binder may be included in the range of 1 to 20 parts by weight based on 100 parts by weight of amorphous carbon. The weight ratio of the binder to amorphous carbon may mean a value converted based on the solid content of the binder, that is, dry weight. In another example, the binder may be included in an amount of 2 parts by weight or more, 3 parts by weight or more, 4 parts by weight or more, 5 parts by weight or more, 6 parts by weight or more, 7 parts by weight or more, or 8 parts by weight or more, and/or 19 parts by weight or less, 18 parts by weight or less, 17 parts by weight or less, 16 parts by weight or less, 15 parts by weight or less, 14 parts by weight or less, 13 parts by weight or less, 12 parts by weight or less, 11 parts by weight or less, or 10 parts by weight or less, based on 100 parts by weight of the amorphous carbon.

The present disclosure may provide an all-solid-state battery having excellent performance and lifespan characteristics by controlling the weight ratio between the components included in the coating layer as described above.

The coating layer of the present disclosure may further include, for example, a solvent. In the present specification, the expression "the coating layer further includes a solvent" may mean that a solvent is used in the process of preparing the coating layer, and may not mean that the coating layer finally prepared through drying or the like includes a solvent. As the solvent, water, N-methylpyrrolidone (NMP), or the like may be used.

The coating layer of the present disclosure may further include, for example, other additives. As the other additive, a filler, a coating agent, a dispersant, an ion conductive aid, and the like, which are used in the conventional all-solid-state batteries, may be used, unless it is contrary to the purpose of the present disclosure.

A particle size analysis may be performed using a particle size analyzer (Mastersizer 3000, Malvem panalytical), and D₉₉/D₁₀ of the coating layer may be, for example, 140 or less. The particle size analysis performed using the Mastersizer 3000 (Malvem panalytical) may reveal that D₉₉/D₁₀ of the coating layer is, in another example, 130 or less, 120 or less, 110 or less, or 100 or less, or 10 or more, 20 or more, or 30 or more. The particle size analysis performed using the particle size analyzer (Mastersizer 3000, Malvem panalytical) may be, for example, a result of assessment using the measurement method according to Assessment Example 2.

The particle size analysis may be performed using the particle size analyzer (Mastersizer 3000, Malvem panalytical) and D₉₉/D₅₀ of the coating layer may be, for example, 12 or less. The particle size analysis performed using the Mastersizer 3000 (Malvem panalytical), in another example, may reveal that D₉₉/D₅₀ of the coating layer is 11 or less, or 10 or less, or 1 or more, 2 or more, 3 or more, 4 or more, or 5 or more.

The particle size analysis performed using the particle size analyzer (Mastersizer 3000, Malvem panalytical) may reveal that D₉₉ of the coating layer is, for example, 3.5 µm or less. The particle size analysis performed using the particle size analyzer (Mastersizer 3000, Malvem panalytical) may reveal that D₉₉ of the coating layer is, in another example, 3.4 µm or less, 3.3 µm or less, 3.2 µm or less, 3.1 µm or less, 3.0 µm or less, and/or 2.9 µm or more, or 1 µm or more, 1.5 µm or more, 2.0 µm or more, or 2.5 µm or more.

The coating layer of the present disclosure may be prepared, for example, by applying a slurry, in which a material forming the coating layer is dispersed, on the anode current collector and drying the slurry.

The thickness of the coating layer of the present disclosure may be 50% or less, 40% or less, 30% or less, 20% or less, 10% or less, or 5% or less of the thickness of the cathode active material layer to be described later. The thickness of the coating layer may be, for example, in the range of 1 to 20 µm, 5 to 18 µm, or 9 to 15 µm. The thickness of the coating layer may be controlled as described above, thereby controlling collapse of the coating layer by the lithium dendrite formed between the coating layer and the anode current collector to be described later, improving cycle characteristics and energy density, and reducing the internal resistance of the all-solid-state battery.

The coating layer of the present disclosure may have, for example, a porosity in the range of 50 to 80%. The porosity of the coating layer may be measured by the method according to an assessment example described later. In another example, the porosity of the coating layer may be 55% or more, 60% or more, or 65% or more, and/or 75% or less or 70% or less.

The cathode may include, for example, a cathode current collector and/or a cathode active material layer.

As the cathode current collector, a known metal usable as a current collector of an all-solid-state battery may be used. The cathode current collector may be, for example, a plate made of copper (Cu), nickel (Ni), aluminum (Al), vanadium (V), gold (Au), platinum (Pt), chromium (Cr), iron (Fe), zinc (Zn), indium (In), germanium (Ge), lithium (Li), magnesium (Mg), stainless steel (e.g., SUS), titanium (Ti), cobalt (Co), or an alloy thereof, a mesh, or a foil. The cathode current collector may be omitted in some cases.

The cathode active material layer may include, for example, a cathode active material, a solid electrolyte, a binder, and/or a conductive material.

The cathode active material reversibly absorbs and desorbs lithium ions. The cathode active material may be, for example, lithium transition metal oxide, such as, lithium cobalt oxide (LCO), lithium nickel oxide, lithium nickel cobalt oxide, lithium nickel cobalt aluminium oxide (NCA), lithium nickel cobalt manganese oxide (NCM), lithium manganate, or lithium iron phosphate, etc., nickel sulfide, copper sulfide, lithium sulfide, iron oxide, or vanadium oxide, and the like, without being limited thereto, and may include any of those used as a cathode active material in the art. The cathode active materials may be used alone or in a combination of two or more.

The lithium transition metal oxide may be a compound represented by one of LiₐA_{1-b}B_{b}D₂(wherein 0.90≤a≤1, and 0≤b≤0.5); LiₐNi_{1-b-c}Co_{b}B_{c}O_{2-α}F₂(wherein 0.90≤a≤1, 0≤b≤0.5, 0≤c≤0.05, and 0 <α<2); LiₐNi_{1-b-c}Mn_{b}B_{c}D_{α}(wherein 0.90≤a≤1, 0≤b≤0.5, 0≤c≤0.05, and 0≤α≤2); LiₐNi_{1-b-c}Co_{b}B_{c}D_{α}(wherein 0.90≤a≤1, 0≤b≤0.5, 0≤c≤0.05, and 0<α≤2); LiₐE_{1-b}B_{b}O_{2-c}D_{c}(wherein 0.90≤a≤1, 0≤b≤0.5, and 0≤c≤0.05); LiE_{2-b}B_{b}O_{4**-**c}D_{c}(wherein 0≤b≤0.5, and 0≤c≤0.05); LiₐNi_{1-b-c}Co_{b}B_{c}O_{2-α}F_{α}(wherein 0.90≤a≤1, 0≤b≤0.5, 0≤c≤0.05, and 0<α<2); LiₐCoG_{b}O₂(wherein 0.90≤a≤1, and 0.001≤b≤0.1); LiₐMnG_{b}O₂(wherein 0.90≤a≤1, and 0.001≤b≤0.1); LiₐMn₂GbO₄(wherein 0.90≤a≤1, and 0.001≤b≤0.1); LiₐNi_{1-b-c}Mn_{b}B_{c}O_{2-α}F_{α}(wherein 0.90≤a≤1, 0≤b≤0.5, 0≤c≤0.05, and 0<α<2); LiₐNi_{1-b-c}Mn_{b}B_{c}O_{2-α}F₂(wherein 0.90≤a≤1, 0≤b≤0.5, 0≤c≤0.05, and 0<α<2); LiₐNi_{b}E_{c}G_{d}O₂(wherein 0.90≤a≤1, 0≤ b≤0.9, 0≤c≤0.5, and 0.001≤d≤0.1); LiₐNi_{b}Co_{c}Mn_{d}GeO₂(wherein 0.90≤a≤1, 0≤b≤0.9, 0≤c≤0.5, 0 ≤d≤0.5, and 0.001≤e≤0.1); LiₐNiG_{b}O₂(wherein 0.90≤a≤1, and 0.001≤b≤0.1); QO₂; QS₂; LiQS₂; V₂O₅; LiV₂O₅; LilO₂; LiNiVO₄; Li_{(3- f)}J₂(PO₄)₃(0≤f≤2); Li(_{3-f)}Fe₂(PO₄)₃(0≤f≤2); and LiFePO₄. In such compounds, A may be Ni, Co, Mn, or a combination thereof; B may be Al, Ni, Co, Mn, Cr, Fe, Mg, Sr, V, a rare earth element, or a combination thereof; D may be O, F, S, P, or a combination thereof; E may be Co, Mn, or a combination thereof; F may be F, S, P, or a combination thereof; G may be Al, Cr, Mn, Fe, Mg, La, Ce, Sr, V, or a combination thereof; Q may be Ti, Mo, Mn, or a combination thereof; I may be Cr, V, Fe, Sc, Y, or a combination thereof; and J may be V, Cr, Mn, Co, Ni, Cu, or a combination thereof. Such a compound used as the cathode active material may further have a coating layer on the surface thereof, or a mixture of such compounds with and without a coating layer may be used. The coating layer added to the surface of such a compound may include, for example, a lithium ion conductive oxide. The lithium ion conductive oxide may include, for example, LiNbO₃, Li₄Ti₅O₁₂, Li₃PO₄, or the like, but is not limited thereto. The compound constituting such a coating layer may be amorphous or crystalline. For the method of forming the coating layer, a spray coating method or an immersion method, for example, may be considered, but the method may be selected without limitation within a range that does not adversely affect the properties of the cathode active material.

When the cathode active material includes nickel (Ni) as a ternary lithium transition metal oxide such as NCA or NCM, it may be possible to increase the capacity density of the all-solid-state battery to reduce metal elution of the cathode active material in a charged state. Accordingly, the cycle characteristics in the charging state of the all-solid-state battery may be improved.

The shape of the cathode active material may be, for example, a particle shape such as a sphere, an elliptical sphere, etc. The particle diameter of the cathode active material is not particularly limited, and may be within a range applicable to the cathode active material of a conventional all-solid secondary battery. The amount of the cathode active material of the cathode is also not particularly limited, and may be within a range applicable to the cathode of a conventional all-solid secondary battery.

The solid electrolyte included in the cathode active material layer may be, for example, the same as or different from the solid electrolyte included in the solid electrolyte layer. The solid electrolyte included in the cathode active material layer may be a sulfide-based solid electrolyte, an oxide-based solid electrolyte, a phosphate-based solid electrolyte, a halide-based solid electrolyte, or the like, but is not limited thereto, and may be those generally used in all-solid-state batteries.

The solid electrolyte included in the cathode active material layer may have, for example, a smaller average particle diameter than the solid electrolyte included in the solid electrolyte layer. For example, the average particle diameter of the solid electrolyte included in the cathode active material layer may be 90% or less, 80% or less, 70% or less, 60% or less, 50% or less, 40% or less, 30% or less, or 20% or less of the average particle diameter of the solid electrolyte included in the solid electrolyte layer.

The binder included in the cathode active material layer may be, for example, acrylonitrile butadiene rubber (ABR), butadiene rubber (BR), styrene butadiene rubber (SBR), polytetrafluoroethylene, polyvinylidene fluoride, polyethylene, or the like.

The conductive material included in the cathode active material layer may be, for example, graphite, carbon black, acetylene black, Ketjen black, carbon fiber or metal powder.

In addition, the cathode active material layer may further include, for example, fillers, coating agents, dispersing agents, ion-conducting aids, and the like, and any additives may be used as long as they are known materials generally used for electrodes of all-solid-state batteries.

The solid electrolyte layer may include, for example, a sulfide-based solid electrolyte. The sulfide-based solid electrolyte may be, for example, at least one selected from Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-Li₃PO₄, Li₂S-SiS₂-LiₚMO_{q}, wherein p and q are positive numbers, and M is one of P, Si, Ge, B, Al, Ga, and In, Li₂S-SiS₂-P₂S₅-LiI, Li₂S-P₂S₅, Li₂S-P₂S₅-LiX, wherein X is a halogen element, Li₂S-B₂S₃, Li₂S-P₂S₅-ZₘSₙ, wherein m and n are positive numbers, and Z is one of Ge, Zn and Ga, Li₂S-GeS₂, Li₇₋ₓPS₆₋ₓClₓ (0≤x≤2), Li₇₋ₓPS₆₋ₓBrₓ(0≤5x≤52) and Li₇₋ₓPS₆₋ₓI_{X}(0≤x≤2). The sulfide-based solid electrolyte may be prepared by, for example, treating a starting raw material such as Li₂S, P₂S₅, or the like by a melt quenching method or a mechanical milling method. In addition, after such a treatment, heat treatment may be performed. The solid electrolyte may be amorphous, crystalline, or a mixed state thereof. In the present disclosure, the sulfide-based solid electrolyte may include, for example, at least sulfur (S), phosphorus (P), and lithium (Li) as constituent elements among the sulfide-based solid electrolyte materials described above.

The sulfide-based solid electrolyte may be, for example, an argyrodite-type compound including at least one selected from Li₇₋ₓPS₆₋ₓClₓ (0≤x≤2), Li₇₋ₓPS₆₋ₓBrₓ (0≤x≤2), and Li₇₋ₓPS₆₋ₓIₓ (0≤x≤2). In particular, the sulfide-based solid electrolyte may be an argyrodite-type compound including at least one selected from Li₆PS₅Cl, Li₆PS₅Br, and Li₆PS₅I.

The density of the argyrodite-type solid electrolyte may be, for example, 1.5 to 2.0 g/cc. Since the argyrodite-type solid electrolyte has a density of 1.5g/cc or more, internal resistance of the all-solid secondary battery may be reduced, and penetration of the solid electrolyte by Li may be effectively suppressed.

An elastic modulus of the solid electrolyte may be, for example, 15 to 35 GPa.

The solid electrolyte layer may include, for example, a binder. The binder included in the solid electrolyte layer may be, for example, one of the type of the binder included in the cathode active material layer and/or the coating layer, but is not limited thereto, and may be any of those used as a binder in the art. The binder included in the solid electrolyte layer may be the same as or different from the binder included in the above-described cathode active material layer and/or coating layer.

As the anode current collector, a known metal usable as a current collector of an all-solid-state battery may be used. As the anode current collector, a material that does not form an alloy and a compound with lithium, for example, may be used. The material used as the anode current collector may be, but are not limited to, selected from the group consisting of copper (Cu), nickel (Ni), aluminum (Al), vanadium (V), gold (Au), platinum (Pt), magnesium (Mg), iron (Fe), titanium (Ti), cobalt (Co), chromium (Cr), zinc (Zn), germanium (Ge), indium (In), stainless steel (e.g., SUS), and the like, and may be any of those used as an electrode current collector in the art unless it is contrary to the purpose of the present disclosure. The anode current collector may be composed of one of the above-described metals, or may be composed of an alloy or a covering material of two or more types of metals. The anode current collector may be, for example, in a plate shape, a mesh shape, or a foil shape, but is not limited thereto.

The all-solid-state battery of the present disclosure may further include a metal including lithium or a lithium alloy and/or a metal (layer) thereof by charging, for example, between an anode current collector and a coating layer and/or in the coating layer. The lithium alloy may include, for example, Li-Al alloy, Li-Sn alloy, Li-In alloy, Li-Ag alloy, Li-Au alloy, Li-Zn alloy, Li-Ge alloy, Li-Si alloy, and the like, but is not limited thereto, and may be any of lithium alloys used in the art. The metal or metal layer between the anode current collector and the coating layer, and/or in the coating layer may be composed of one of these alloys or lithium, or may be composed of various kinds of alloys.

The thickness of the metal layer including the lithium or the lithium alloy may be, for example, in the range of 1 to 1000 µm, 1 to 500 µm, 1 to 200 µm, 1 to 150 µm, 1 to 100 µm, or 1 to 50 µm. It is necessary to control the thickness as described above in order for the metal layer to function well as a lithium storage and to improve the cycle characteristics.

The metal layer may be formed by being precipitated between the anode current collector and the coating layer by, for example, charging after assembling an all-solid-state battery. When a metal layer is formed between the anode current collector and the coating layer by charging after the assembly of the all-solid-state battery, the anode current collector and the coating layer, and a region therebetween may be, for example, a lithium-free region that does not include lithium in an initial state or a post-discharge state of the all-solid-state battery.

For example, the all-solid-state battery of the present disclosure may have a ratio of the second cycle discharge capacity to the first cycle discharge capacity of 98.3% or more, a ratio of the third cycle discharge capacity to the first cycle discharge capacity of 97.0% or more, or a ratio of the fourth cycle discharge capacity to the first cycle discharge capacity of 91.5% or more, as a result of assessment of the high rate discharge characteristics. The measurement of the assessment of the high rate discharge characteristics may follow the method according to an assessment example described later.

The all-solid-state battery of the present disclosure may have, for example, a ratio of the 39^{th} cycle discharge capacity to the first cycle discharge capacity of 90% or more or 95% or more as a result of assessment of the high-rate charge characteristics. Specifically, the all-solid-state battery may have a ratio of the discharge capacity at the 39^{th} cycle to the discharge capacity at the first cycle of 97% or more, or 97.8% or more. The measurement of the assessment of the high-rate charge characteristics may follow the method according to an assessment example described later.

Additionally, the present invention provides an anode assembly for an anodeless battery.

The anode assembly for the anodeless battery includes: an anode current collector and a coating layer, wherein the coating layer includes an amorphous carbon, wherein the amorphous carbon includes a nitrogen-containing amorphous carbon, and wherein the nitrogen amount (atomic %) in the coating layer is within the range of 0.5% to 7%.

The descriptions of the anode current collector and the coating layer for the anode assembly for an anodeless battery are the same as the descriptions provided above for the anode current collector and coating layer. Similarly, the descriptions of the amorphous carbon and the nitrogen-containing amorphous carbon are also the same as those provided above.

The anode assembly is designed for an anodeless battery, which can mean a battery that does not have a conventional anode active material layer on the anode current collector before initial charging. Instead, lithium is deposited on the anode current collector during charging. This refers to an anodeless or anode-free type battery.

Specifically, the anode assembly includes a coating layer on the anode current collector, with the nitrogen content (in atomic %) of the coating layer ranging from 0.5% to 7%. By satisfying this nitrogen content range, the lithium diffusion resistance is reduced, and the irreversible reaction between nitrogen and lithium ions is minimized, thereby enhancing the coulombic efficiency and/or high-rate charge-discharge characteristics of the all-solid-state battery containing this anode assembly.

Additionally, the present invention provides a method for manufacturing an anode assembly. This method includes: mixing a nitrogen-containing precursor with an amorphous carbon; heat-treating the nitrogen-containing precursor mixed with the amorphous carbon to obtain nitrogen-containing amorphous carbon; and forming a coating layer containing the nitrogen-containing amorphous carbon on a surface of an anode current collector.

In this case, the nitrogen-containing precursor may include at least one selected from the group consisting of melamine, dopamine, urea, and chitosan, but it is not limited to these.

Specifically, the step of mixing the nitrogen-containing precursor with the amorphous carbon may include mixing the nitrogen-containing precursor and the amorphous carbon at a weight ratio of 2:1 to 10:1. For example, this may include mixing the nitrogen-containing precursor and the amorphous carbon at a weight ratio of 3:1 to 7:1, or 4:1 to 6:1.

By adjusting the mixing weight ratio of the nitrogen-containing precursor and the amorphous carbon as described above, the nitrogen amount (atomic %) included in the coating layer can be controlled, and the ratio of nitrogen amount (atomic %) to carbon amount (atomic %) within the coating layer can also be adjusted. However, it is not limited thereto.

In the step of heat-treating the nitrogen-containing precursor mixed with amorphous carbon to obtain nitrogen-containing amorphous carbon, the heat treatment may be carried out at a temperature of 600°C to 1200°C, 700°C to 1000°C, or 800°C to 950°C, but it is not limited thereto.

The heat treatment time may be from 0.1 hours to 5 hours, 0.2 hours to 3 hours, or 0.5 hours to 1.5 hours, but it is not limited thereto.

Hereinafter, the present disclosure will be described in detail with reference to Examples in order to specifically explain the disclosure of the present disclosure as described above and the actions and effects intended in the present disclosure. However, the Examples may be modified into various other forms, and the scope of the present specification is not interpreted to be limited to the Examples only. It is emphasized that the Examples are provided as representative of the invention to those skilled in the art to describe the present disclosure in more detail.

### Preparation Example. Nitrogen-containing amorphous carbon preparation

Carbon black (referred to as "untreated carbon black" for distinguishing it from nitrogen-containing carbon black) and melamine were mixed evenly in a 1:5 weight ratio, placed in a crucible and heated to 900 °C while injecting argon gas from a tube furnace, and held for 1 hour to obtain nitrogen-doped carbon black.

### Example 1.

### (Anode)

6 g of carbon (average particle diameter of 41 nm), 2 g of silver (Ag) nanoparticles (average particle diameter of 60 nm), 9.33 g of PVdF solution (solid content of 6%) and 7.19 g of NMP solution were put in a thinky mixer container and mixed 12 times at 2000 rpm for 3 minutes. In this case, as the carbon, 3 g of untreated carbon black and 3 g of the nitrogen-doped carbon black prepared in the Preparation Example were used. Thereafter, 5 g of an NMP solution is additionally added and mixed 5 times at 2000 rpm for 3 minutes to prepare the slurry of a coating layer. Subsequently, a SUS foil having a thickness of 10 µm was coated with the slurry using a bar coater, dried in air at 80°C for 20 minutes, and vacuum dried at 100°C for 12 hours. Through this, an anode where a coating layer having a thickness of 14.0 µm and a porosity of 67.1% was formed on the SUS foil was obtained.

In Example 1, the nitrogen content (at%) in the coating layer was 1.4 at% of the total atoms in the coating layer, as determined by XPS analysis.

### (Cathode)

LiNi_{0.8}Co_{0.15}Mn_{0.05}O₂ (NCM) as a cathode active material, Li₆PS₅Cl, an argyrodite-type crystal as a solid electrolyte, polytetra fluoro ethylene (Teflon binder, Dupont) as a binder, and carbon nanofibers (CNF) as a conductive material were prepared. Subsequently, the materials were mixed in a weight ratio of cathode active material: solid electrolyte: conductive material: binder = 84:15:0.2:1.2, and the mixture was formed to have a large size in a sheet form, thereby preparing a cathode sheet. In addition, this cathode sheet was pressed against an aluminum foil cathode current collector having a thickness of 18 µm to produce a cathode. The initial charge capacity (charge capacity at the first cycle) of the cathode was about 20 mAh for 4.25V charging. The cathode weight was about 110 mg (about 203 mAh/g per weight of the active material).

### (Solid Electrolyte Layer)

The solid electrolyte layer including a Li₆PS₅Cl solid electrolyte was used.

### (All-solid-state Battery)

The cathode, solid electrolyte, and anode were laminated and sealed in a pouch in a vacuum state to prepare an all-solid-state battery. Here, each parts of the cathode current collector and the anode current collector protrude out of the pouch so that the vacuum of the battery may be maintained. These projections were used as positive and negative terminals. In addition, this all-solid-state battery was hydraulic-treated at 500 MPa for 30 minutes. By performing such hydrostatic pressure treatment, the characteristics as the all-solid-state battery are greatly improved.

### Example 2.

In the same manner as in Example 1 except for using only nitrogen-doped carbon black prepared in the above Preparation Example as carbon when preparing the anode, an all-solid-state battery including an anode where a coating layer having a thickness of 15.1 µm and a porosity of 66.5% was formed on a SUS foil was obtained.

In Example 2, the nitrogen amount (at%) in the anode-free coating layer was 2.8 at% of the total atoms in the coating layer, as determined by XPS analysis.

### Comparative Example 1.

In the same manner as in Example 1 except for using only untreated carbon black as carbon when preparing the anode, an all-solid-state battery including an anode where a coating layer having a thickness of 16 µm and a porosity of 67.1% was formed on a SUS foil was obtained.

### Assessment Example 1. Particle size distribution of the slurry of the coating layer

### (Separation of Slurry Samples)

A part of the coating layer slurry of Examples 1 and 2 and Comparative Example 1 were taken and diluted with NMP solution to prepare an analysis sample.

### (Analytical Instrument)

Particle size analysis of the sample was performed using a particle size analyzer (Mastersizer 3000, Malvem panalytical).

Specifically, each of the analysis samples prepared above was put into a sample inlet of the device, and particle size analysis was performed under the following setting conditions.
⊙ Particle Type : Carbon C
⊙ Material:
   - Material name : Carbon C (carbon black)
   - Refractive index : 1.746
   - Adsorption index : 1.000
⊙ Light source:
   - Red light source: Max. 4mW He-Ne, 632.8 nm
   - Blue light source: Max. 10mW LED, 470 nm
⊙ Dispersant:
   - Dispersant name : NMP
   - Refractive index : 1.465
⊙ Measurement obscuration limits: 10-15 %
⊙ Analysis model: Mie scattering

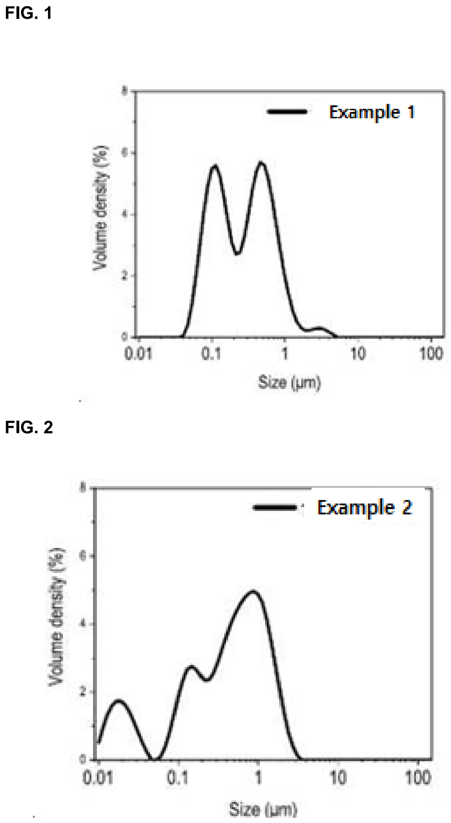

The results of analyzing the particle size distribution based on the volume of the coating layer slurry according to the above method are shown in TABLE 1 and FIGs. 1 to 3. In Examples 1 and 2, it was confirmed that the fine powder or large powder was reduced compared to Comparative Example 1.

**[TABLE 1]**

| Classification | D10 (µm) | D50 (µm) | D90 (µm) | D99 (µm) | D99/D10 | D99/D50 |
|---|---|---|---|---|---|---|
| Example 1 | 0.087 | 0.294 | 0.863 | 2.87 | 32.99 | 9.76 |
| Example 2 | 0.026 | 0.494 | 1.51 | 2.54 | 97.69 | 5.14 |
| Comparative Example 1 | 0.028 | 0.304 | 0.834 | 3.95 | 141.07 | 12.99 |

### Assessment Example 2. High-rate discharge characteristics

All solid state batteries (pouch type monocells) of the above Examples 1 and 2 and Comparative Example 1 were driven at a working voltage range of 4.25V-3.0V and a driving temperature of 60°C under the following charge/discharge conditions to assess high rate discharge characteristics, and the results thereof are shown in TABLE 2 below.

### (Charge/Discharge Conditions)

First cycle: charge - 0.1 C 4.25V CC/CV, 0.05C cut-off/discharge - 0.1C, 3.0V, CC
Second cycle: charge - 0.1 C 4.25V CC/CV, 0.05C cut-off/discharge - 0.33C, 3.0V, CC
Third cycle: Charge - 0.1 C 4.25V CC/CV, 0.05C cut-off/ discharge - 0.5C, 3.0V, CC
Fourth cycle: Charge - 0.1 C 4.25V CC/CV, 0.05C cut-off/ discharge - 1.0C, 3.0V, CC

**[TABLE 2]**

| Classification | Example 1 | Example 2 | Comparative Example 1 |
|---|---|---|---|
| (2^{nd} cycle discharge capacity/1^{st} cycle discharge capacity) X 100 | 98.5 | 99.1 | 98.2 |
| (3^{rd} cycle discharge capacity/1^{st} cycle discharge capacity) X 100 | 97.3 | 98.3 | 96.7 |
| (4^{th} cycle discharge capacity/1^{st} cycle discharge capacity) X 100 | 93.2 | 96.4 | 91.2 |

### Assessment Example 3. High-rate charge characteristics

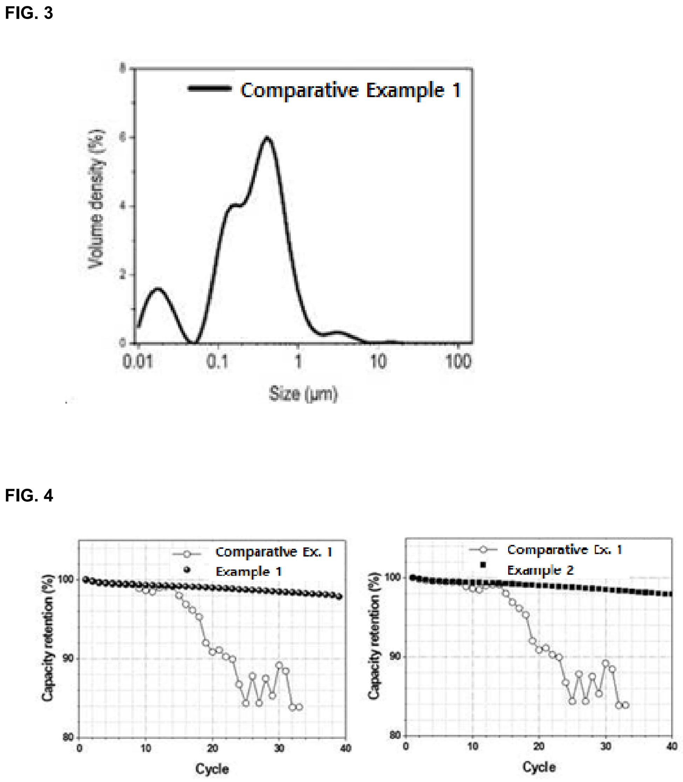

All solid state batteries (pouch-type monocells) of the above Examples and Comparative Example were driven at a working voltage range of 4.25V-3.0V and a driving temperature of 60°C under the following charge/discharge conditions to assess high rate discharge characteristics, and the results thereof are shown in FIG. 4.

### (Charge/Discharge Conditions)

### Charge - 1.0 C 4.25V CC/CV, 0.1C cut-off / discharging - 0.33C, 3.0V, CC

As a result of the assessment, a short circuit occurred after 12 cycles in Comparative Example 1, and it was confirmed that Examples 1 and 2 showed stable life characteristics compared to Comparative Example 1. Specifically, Example 1 showed a capacity retention rate of 97.8% at 39 cycles compared to 1 cycle discharge capacity, and Example 2 showed a capacity retention rate of 97.9% at 39 cycles compared to 1 cycle discharge capacity.

### Assessment Example 4. Photoelectron spectroscopic analysis

Composition analysis of the untreated carbon black and nitrogen-doped carbon black prepared according to the Preparation Example was performed as follows.

### (Instrument Used)

### Photoelectron spectroscopy (K-Alpha, Thermo Fisher Scientific)

### (Test Method)

Powder samples were fixed on carbon tape by referring to the powder sample preparation method (AMT-3923-0K) for ESCA analysis. For each sample, survey scan spectrum and narrow scan spectrum were obtained without separate treatment. Narrow scan spectrum was measured at 4 points for each location to obtain the average and deviation.

### (ESCA Common Experimental Conditions)

X-ray source: Monochromated Al Kα (1486.6 eV)
X-ray spot size: 400 µm
Operation mode: CAE (Constant Analyzer Energy) mode
Survey scan: pass energy 200 eV, energy step 1 eV
Narrow scan: scanned mode, pass energy 50 eV, energy step 0.1 eV
Charge compensation: flood gun off
SF: Al THERMO1, ECF: TPP-2M, BG subtraction: Smart

As a result, the elemental composition ratio was confirmed as shown in TABLEs 3 and 4 below.

**[TABLE 3]**

| Element | Preparation Example | | Untreated Carbon Black | |
|---|---|---|---|---|
| | Mean | Std | Mean | Std |
| C | 89.3 | 1.1 | 92.1 | 0.8 |
| O | 7.3 | 1.4 | 7.6 | 0.8 |
| S | 0.1 | 0.02 | 0.3 | 0.03 |
| N | 3.2 | 0.3 | - | - |
| Sum | 100.0 | | 100.0 | |

TABLE 3 shows a composition ratio (atomic %_4point average) of individual elements included in the Preparation Example and the untreated carbon black.

**[TABLE 4]**

| Classification | Pyridinic N | Graphitic N |
|---|---|---|
| Pt 1 | 35.8 | 64.2 |
| Pt 2 | 37.6 | 62.4 |
| Pt 3 | 30.2 | 69.8 |
| Pt 4 | 31.6 | 68.4 |
| Average | 33.8 | 66.2 |
| Deviation | 3.5 | 3.5 |

TABLE 4 shows a composition ratio of N 1s peak fitting element (atomic %) for the nitrogen-doped carbon black of the Preparation Example.

## Claims

1. An all-solid-state battery, comprising:
a cathode;
a solid electrolyte layer;
a coating layer; and
an anode current collector,
wherein the coating layer comprises an amorphous carbon,
wherein the amorphous carbon comprises a nitrogen-containing amorphous carbon, and
wherein a nitrogen amount (atomic %) included in the coating layer ranges from 0.5% to 7%.

2. The all-solid-state battery of claim 1, wherein the nitrogen-containing amorphous carbon is a nitrogen-doped amorphous carbon.

3. The all-solid-state battery of claim 1, wherein the nitrogen-containing amorphous carbon is an amorphous carbon with nitrogen doped on a surface thereof.

4. The all-solid-state battery of claim 1, wherein 90% or more of nitrogen in the nitrogen-containing amorphous carbon is located within a depth of 5 nm from the surface of the nitrogen-containing amorphous carbon.

5. The all-solid-state battery of claim 1, wherein the atomic ratio of carbon to nitrogen in the coating layer is in the range of 14:1 to 200:1.

6. The all-solid-state battery of claim 1, wherein the amorphous carbon has an average particle diameter of primary particles of less than 100 nm.

7. The all-solid-state battery of claim 1, wherein the amorphous carbon is one or more selected from the group consisting of carbon black, acetylene black, furnace black, Ketjen black and graphene.

8. The all-solid-state battery of claim 1, wherein the amorphous carbon further comprises untreated amorphous carbon that does not include nitrogen.

9. The all-solid-state battery of claim 1, wherein the coating layer further comprises a lithium-affinitive element capable of forming an alloy or compound with lithium.

10. The all-solid-state battery of claim 9, wherein the lithium-affinitive element is comprised in a range of 10 to 50 parts by weight based on 100 parts by weight of the amorphous carbon.

11. The all-solid-state battery of claim 9, wherein the lithium-affinitive element is at least one selected from the group consisting of gold (Au), platinum (Pt), palladium (Pd), silicon (Si), silver (Ag), aluminum (Al), bismuth (Bi), tin (Sn), and zinc (Zn).

12. The all-solid-state battery of claim 9, wherein a ratio of an average particle diameter of the lithium-affinitive element to an average particle diameter of primary particles of the amorphous carbon is in the range of 0.5 to 5.

13. The all-solid-state battery of claim 1, wherein the coating layer further comprises a binder.

14. The all-solid-state battery of claim 13, wherein the binder is comprised in a range of 1 to 20 parts by weight based on 100 parts by weight of the amorphous carbon.

15. The all-solid-state battery of claim 1, wherein D₉₉/D₁₀ of the coating layer is 140 or less.

16. The all-solid-state battery of claim 1, wherein D₉₉/D₅₀ of the coating layer is 12 or less.

17. The all-solid-state battery of claim 1, wherein a ratio of a 39^{th} cycle discharge capacity to a first cycle discharge capacity of the all-solid-state battery is 90% or more.

18. An anode assembly for an anodeless battery, comprising:
an anode current collector; and
a coating layer,
wherein the coating layer comprises an amorphous carbon,
wherein the amorphous carbon comprises a nitrogen-containing amorphous carbon, and
wherein a nitrogen amount (atomic %) included in the coating layer ranges from 0.5% to 7%.

19. A method of manufacturing an anode assembly, comprising the steps of:
mixing a nitrogen-containing precursor with an amorphous carbon;
heat-treating the mixed nitrogen-containing precursor with the amorphous carbon in a furnace to obtain a nitrogen-containing amorphous carbon; and
forming a coating layer comprising the nitrogen-containing amorphous carbon on a surface of an anode current collector.

20. The method of claim 19, wherein the nitrogen-containing precursor comprises at least one selected from the group consisting of melamine, dopamine, urea and chitosan.
